# EUROPEAN PATENT APPLICATION

(11) **EP 1 564 153 A1**
(43) Date of publication of application: **17.08.2005**
(21) Application number: 05003302.6
(22) Date of filing: 16.02.2005
(51) Int. Cl.: B65D 65/46, C08J 5/18, C08L 67/02

(54) **Packaging material**

(30) Priority: 16.02.2004 JP 2004037559
(71) Applicant: NIPPON SHOKUBAI CO., LTD., Chuo-ku, Osaka-shi, Osaka-fu 541 (JP)
(72) Inventor: Otome, Shigeo, Kyoto-shi Kyoto (JP)
(74) Representative: Müller-Boré & Partner Patentanwälte

(57) **Abstract**

The present invention provides a packaging material including a biodegradable packaging material for suppressing scattering of an article to be packaged which has a volatile substance and/or a smell. Specifically, the invention provides a packaging material for packaging a volatile substance and/or a smell generating substance, and the packaging material has a layer including a biodegradable resin material containing 30 to 100% by weight of a polyethylene succinate-based polymer.

## Description

The present invention relates to a packaging material for packaging a volatile substance and/or a smell generating substance, the packaging material which has a biodegradable resin layer for suppressing scattering thereof.

As a material for preventing scattering of a volatile substance and/or a smell generating substance, polyethylene terephthalate, a copolymer of ethylene and vinyl alcohol, and nylon have conventionally been known and, for example, they are used in flavor retaining utility for foods. However, these are fundamentally poor in biodegradability and, when being discarded, pollution of the environment has been feared.

On the other hand, as a biodegradable resin, there have conventionally been natural substances, e.g., polysaccharides and sugars such as cellulose and starch, which have been modified, processed, or mixed with other plastics, polyhydroxyalkanoate synthesized by microorganisms, polycaprolactone, polylactic acid using lactic acid as a raw material, and polybutylene succinate obtained by polycondensing dicarboxylic acid and diol. In particular, a polyethylene succinate-based polymer is known as a resin having excellent biodegradability under aerobic condition and anaerobic condition while maintaining flexibility and heat sealability.

Regarding barrier ability for a volatile substance and a smell, as described, for example, in "Housouyou Film Gairon" (Toyobo Package Plan Service, P.63-64), there is not necessarily a relationship between oxygen gas barrier property, and barrier ability for a volatile substance and a smell, that is, suppression of scattering of a volatile substance and a smell to the outside when formed into a packaging material, and there has been no finding of a polyethylene succinate-based polymer regarding them.

An object of the present invention is to provide a biodegradable package for packaging a volatile substance and/or a smell generating substance, and the biodegradable package which prevents scattering of them.

According to the present invention, a packaging material for packaging a volatile substance and/or a smell generating substance, the packaging material comprises a layer including a biodegradable resin material containing 30 to 100% by weight of a polyethylene succinate-based polymer.

The package of the present invention is elective in suppressing diffusion of a volatile substance and/or a smell, and is suitably utilized as a package for suppressing scattering of a volatile substance and/or a smell generating substance. In addition, since the package of the invention is decomposed and vanished under natural environment such as in soils after use, it is used as one solution for solving environmental pollution due to plastic waste.

The present invention relates to a package for packaging a volatile substance and/or a smell generating substance, and a packaging material of the present invention which has a layer including a biodegradable resin material containing 30 to 100% by weight of a polyethylene succinate-based polymer (hereinafter, referred to as polyethylene succinate-based resin composition), and provides a package for preventing or alleviating diffusion of a volatile substance and/or a smell to the outside of a packaging material.

A packaging material represents a material for packaging an article to be packaged which has a volatile substance and/or a smell, a form thereof is not particularly limited, but for example, a three sided seal bag, a four sided seal bag, a pillow bag, a gusset, an envelop sealer, a stick type, and a standing pouch, which are obtained by sealing a film-like or sheet-like packaging material with an adhesive or heat, a material in which one end of a bag is provided with a unit such as a zip and which has a form capable of opening and closing, and sealing the content, a material sealed using a binding material such as a string, a band and a tape, or other connecting unit at one end or both ends of a bag, a caramel package, a drawn package, a prethrough package, a strip package, a bag-in box, a brick-shaped container, a gable top container, a blister pack, a laminated tube, an overhold, a material obtained by performing stretching treatment at a melting point of a polyethylene succinate-based polymer or less to impart shrinking function, a material obtained by increasing an orientation degree in one direction to impart easy openability, and a combination thereof may be used, and a part of a packaging material may be another material.

In order to improve effect of preventing diffusion of a volatile substance and/or a smell generating substance, or in order to impart other property, a package for multiple packaging, or a multiple-layered construction with a layer comprising other material other than a layer comprising a polyethylene succinate-based resin composition, for example, a paper, modified cellulose, a non-woven fabric, or other biodegradable resin may be used. In addition, a layer including a polyethylene succinate-based resin composition may be coated with the known barrier coating solution. Examples of the barrier coating solution may include an aqueous polyvinyl alcohol solution and the like. Alternatively, a method of improving barrier property by depositing various metals or alloys or oxides thereof, in addition to provision with a layer including a polyethylene succinate-based resin composition may be used jointly, and examples thereof may include aluminum deposition, and deposition of ceramic such as silicon oxide.

In order to further enhance effect of suppressing scattering of a volatile substance and/or a smell generating substance, the aforementioned packaging material may be multiple.

Production of the packaging material of the present invention is not particularly limited, but includes a sheet and a film produced by extrusion with a T die, or by an inflation method or a casting method, or a material obtained by shaping them by vacuum molding. In order to further improve barrier property, it is preferable to subject a film to monoaxial or biaxial stretching treatment. Additionally, a multi-layered construction may be adopted by coextrusion of two or more layers, melt lamination, dry lamination, or adhesion via an adhesive layer.

A volatile substance and/or a smell generating substance which are (is) an article to be packaged is not particularly limited, the article diffuses a volatile substance and/or a smell, or a part thereof under its use or storage environment, and examples thereof may include seasoning, food, confectionery, perfume material, cosmetic, aromatic substance, shampoo, and soap, and drug, substance generating an uncomfortable smell, or a not preferable gas even having no smell, such as excretion of pet, and substance which are intended to be enclosed in the interior of a package.

It is necessary that the packaging material of the present invention has biodegradability under natural environment such as active sludge, composts, in soils and in seawater, that is, the material is decomposed by microorganism or bacteria present in soils, seawater, and sludge. The packaging material has a biodegradability degree which is tested and confirmed by any test method of ISO14851; JIS K6950, ISO14852; JIS K6951, ISO14855; JIS K6953, and a biodegradability test (MITI method) of the Chemical Substances Control Law, preferably of 30% or more, further preferably 60% or more. It is most preferable that biodegradability is confirmed even under anaerobic condition of ISO15985.

The polyethylene succinate-based polymer represents polyethylene succinate and a copolymer thereof. Examples of a copolymerization component include dicarboxylic acid, diol, polyether polyol, hydroxycarboxylic acid, a compound having at least three functional groups which provides an ester such as hydroxyl group and carboxyl group, a sulfonate compound, natural amino acid, polyamide and the like.

From a viewpoint of oxygen gas barrier property and crystallization, an ethylene succinate unit is preferably 50% by mass or more, further preferably 70% by mass or more, most preferably 90% by mass or more.

The polyethylene succinate-based polymer may be linear, or may contain a branched structure. Additionaly, a chain of the polymer may be elongated with a coupling agent such as diisocyanate.

Examples of the dicarboxylic acid which may be copolymerized may include saturated aliphatic carboxylic acid such as oxalic acid, malonic acid, adipic acid, azelaic acid and sebacic acid, and an ester derivative thereof (e.g., alkyl ester; a carbon number of an alkyl part is preferably 1 to 6), unsaturated aliphatic carboxylic acid such as fumaric acid and maleic acid, and an ester derivative thereof (e.g., alkyl ester; a carbon number of an alkyl part is preferably 1 to 6), and aromatic dicarboxylic acid such as orthophthalic acid, isophthalic acid, terephthalic acid and naphthalenedicarboxylic acid, and an ester derivative thereof (e.g., alkyl ester; a carbon number of an alkyl part is preferably 1 to 6).

Examples of the diol may include alkanediol having 3 to 6 carbon atoms, and cycloalkanediol having 5 to 8 carbon atoms, for example, 1,2- and 1,3-propane diol, 1,2- and 1,4-buthanediol, 1,5-pentanediol or 1,6-hexanediol, cyclopentanediol, cyclohexanediol, 1,2-cyclohexanedimethanol, 1,4-cyclohexanedimethanol and the like.

Examples of the polyether polyol may include diethylene glycol, triethylene glycol, polyethylene glycol, polypropylene glycol, polytetramethylene glycol, and a copolymer thereof.

As the hydroxycarboxylic acid, glycolic acid, D-, L- or D,L-lactic acid, 6-hydroxyhexanoic acid, and a cyclic derivative thereof is used, and specific examples thereof may include glycolide (1,4-clioxane-2,5-dione), D- or L-dilactide (3,6-dimethyl-1,4-dioxane-2,5-dione), p-hydroxybenzoic acid and an oligomer and a polymer thereof, for example, poly-3-hydroxybutyric acid, polyhydroxyvaleric acid, polylactide and poly-3-hydroxybutyric acid.

Examples of the compound having at least three functional groups which provides an ester may include tartaric acid, citric acid, malic acid, itaconic acid, trimethylolpropane, trimethylolethane, pentaerythritol, polyether triol, glycerol, trimesic acid, trimellitic acid or an anhydride thereof, pyromellitic acid or a dianhydride thereof, and hydroxyisophthalic acid, and a mixture thereof. In this regard, when gelling in a reaction of a polyethylenesuccinate-based polymer, reduction in elongation percentage and impact of a polyethylenesuccinate-based polymer in a packaging material configuration are taken into consideration, a content of the compound having three functional groups which provides an ester is preferably 0.5 mole or less, further preferably 0.4 mole or less, most preferably 0.3 mole or less relative to 100 mole of a total dicarboxylic acid component in a polyethylene succinate-based polymer, and a content of an compound having four functional groups which provides an ester is preferably 0.4 mole or less, further preferably 0.3 mole or less, most preferably 0.25 mole or less relative to 100 mole of a dicarboxylic acid component.

Examples of the sulfonate compound may include an alkali metal salt or an alkaline earth metal salt of dicarboxylic acid containing a sulfonate group, and an ester-forming derivative thereof.

Examples of the natural amino acid may include glycine, aspartic acid, glutamic acid, alanine, valine, leucine, isoleucine, tryptophan, and phenylalanine, as well as an oligomer and a polymer obtained therefrom, for example, polyaspartic acid imide and polyglutamic acid imide, preferably glycine.

Examples of the polyamide may include polyamides obtained by polycondensing diamine having 4 to 10 carbon atoms, such as tetramethylenediamine, pentamethylenediamine, hexamethylenediamine, heptamethylenediamine, octamethylenediamine, nonamethylenediamine and decamethylenediamine, and succinic acid, dicarboxylic acid having 4 to 6 carbon atoms, and the aforementioned dicarboxylic acid.

A method of synthesizing a polyethylene succinate-based polymer is not particularly limited, but the polymer is obtained by (i) a method of polycondensing polybasic acid (or ester thereof) and glycol, (ii) a method of ring opening-polymerizing cyclic acid anhydride and cyclic ether, or (iii) a method of transesterifying separately synthesized or recovered different resins. A polycondensation reaction may be according to a normal transesterification method, or an esterification method, or combination use of both of them. In addition, in order to obtain a higher molecular weight, further deglycolation reaction may be performed by any method.

A vertical reactor, a batch reactor, a horizontal reactor, and a biaxial extruder are used in a reaction, and a reaction is performed in a bulk or a solution.

Examples of an esterification catalyst, a ring opening polymerization catalyst and a deglycolation catalyst may include a metal such as lithium, sodium, potassium, cesium, magnesium, calcium, barium, strontium, zinc, aluminum, titanium, cobalt, germanium, tin, lead, antimony, cadmium, manganese, iron, zirconium, vanadium, iridium, lanthanum, and selenium, and an organometallic compound, a salt of an organic acid, metal alkoxide, and metal oxide thereof. If necessary, a promoter such as phosphoric acid may be used together. These catalysts may be used alone, or in combination of two or more, and an addition amount is preferably 1.0mole or less, more preferably 0.8 mole or less, further preferably 0.6 mole or less relative to 100 mole of total dicarboxylic acid.

Further, the polyethylene succinate-based polymer obtained by the aforementioned synthesis method may be converted into a polymer having a higher molecular weight using a chain extender, if necessary. Examples of the chain extender may include an isocyanate compound, an epoxy compound, an aziridine compound and an oxazoline compound which are di- or more-functional, as well as polyvalent metal compound, multifunctional acid anhydride, phosphoric acid ester, and phosphorous acid ester. These may be used alone, or in combination of two or more.

In terms of reaction rate, the isocyanate compound is preferable. The isocyanate compound is not limited, but is a compound having at least two isocyanate groups per molecule, examples of the isocyanate compound may include tolylene diisocyanate, 4,4'-diphenylmethane diisocyanate, hexamethylene diisocyanate, xylylene diisocyanate, metaxylene diisocyanate, 1,5-naphthalene diisocyanate, hydrogenated diphenylmethane diisocyanate, hydrogenated tolylene diisocyanate, hydrogenated xylylene diisocyanate.

The reaction ratio between the polyethylene succinate-based polymer and the isocyanate compound is not especially limited. However, for example, the ratio between the isocyanate group in the isocyanate compound and the hydroxyl group in the polyethylene succinate-based polymer (NCO/OH) (molar ratio)) is favorable in the range of 0.5 to 0.3, more favorably 0.8 to 1.5. Incidentally, it is free to use conventional catalyst such as organotin compound and tertiary amine, if necessary.

A weight-average molecular weight of a polyethylene succinate-based polymer is not particularly limited, but is 180000 to 400000 and, from a viewpoint of moldability, a value of melt flow index (MFR) measured under condition of a temperature of 190°C and a load of 2.16 kg is preferably 0.1 to 10, more preferably 0.8 to 8, most preferably 1 to 6.

The packaging material of the present invention contains a polyethylene succinate-based polymer as an essential component, and may contain one or more kinds of other biodegradable resins as far as the effect of the invention is not deteriorated.

Examples of a structure in which other biodegradable resin is contained in a packaging material may include a multilayer structure in which a polyethylene succinate-based polymer and one or more kinds of other biodegradable resins constitute separate layers, and a structure in which one of them forms a matrix layer, and the other forms a dispersion layer. A content of other biodegradable resin is in a range of 70 to 0% and, when the effect of suppressing scattering of a volatile substance and/or a smell is taken into consideration, a content of a polyethylene succinate-based polymer is preferably 30% by mass or more, more preferably 50% by mass or more, most preferably 70% by mass or more.

Examples of the other biodegradable resin may include biodegradable resins containing aliphatic polyester or aromatic dicarboxylic acid as a constitutional unit, natural biodegradable resins and the like.

Examples of the aliphatic polyester may include polybutylene succinate, polybutylene succinate adipate, polyhexamethylene succinate, polyethylene adipate, polyhexamethylene adipate, polybutylene adipate, polyethylene oxalate, polybutylene oxalate, polyneopentyl oxalate, polyethylene sebacate, polybutylene sebacate, polyhexamethylene sebacate, poly(α-hydroxy acid) such as polyglycolic acid and polylactic acid, poly(ω-hydroxyalkanoate) such as poly(ε-caprolactone) and poly(β-propiolactone), poly(β-hydroxyalkanoate) such as poly(3-hydroxybutyrate), poly(3-hydroxyvalerate), poly(3-hydroxycaprolate), poly(3-hydroxyheptanoate), and poly(3-hydroxyoctanoate), and poly(4-hydroxybutyrate), and a copolymer thereof may be used.

Examples of the biodegradable resin containing an aromatic dicarboxylic acid as a constitutional unit may include polyethylene succinate terephthalate, polybutylene succinate terephthalate, polybutylene adipate terephthalate, and polybutylene succinate adipate terephthalate and the like, and Ecoflex manufactured by BASF Ltd., EasterBio manufactured by Eastman Chemical Industries Co., Ltd., and Biomax manufactured by DuPont Inc.

Examples of the natural biodegradable resin may include denatured starch, modified starch, cellulose, modified cellulose, cellulose acetate, chitosan and the like.

A tensile elastic modulus of a layer including a polyethylene succinate-based resin composition is preferably 150 kgf/mm² (1470 MPa) or less, more preferably 100 kgf/mm² or less, further preferably 80 kgf/mm² or less, preferably 12 kgf/mm² or more, more preferably 15 kgf/mm² or less, further preferably 20 kgf/mm² or more. By setting a tensile elastic modulus of a packaging material to 150 kgf/mm² or less, flexibility is obtained. On the other hand, when a tensile elastic modulus is less than 12 kgf/mm², a packaging material is easily elongated, and is inferior in handling property in some cases.

In addition, a tensile elongation is preferably 200% or more, more preferably 300% or more, further preferably 400% or more. By setting a tensile elongation to 200% or more, breakage to various stresses becomes difficult to occur, and this is preferable from a viewpoint of properties of a packaging material.

The tensile elastic modulus and tensile elongation are both a value measured according to the provision of JIS K-7127 (test method of plastic-tensile property).

If necessary, other components such as a crystal nucleus agent, a pigment, a dye, a heat resistant agent, an antioxidant, a weather resistant agent, a lubricant, an anti-blocking agent, a slip agent, an antistatic agent, a stabilizer, a filler, a reinforcing material, a fire-retardant, a plasticizer, an antibacterial agent, and other polymer which is not biodegraded is added to the polyethylene succinate-based resin composition in present invention in such a range that the effect of the invention is not deteriorated.

Hereinafter, the invention will be described in detail by way of examples; however, the scope of the invention is not limited to these examples. Evaluation methods performed in the examples are as follows.

### [Molecular weight]

A weight-average molecular weight was measured using gel permeation chromatography (GPC), using polystyrene as a standard substance.

### [Haze value]

The haze value of the film which was obtained by inflation molding was measured with NDH 300A manufactured by Nippon Denshoku Industries Co., Ltd. under condition of a temperature of 23°C and a relative humidity of 55% according to JIS K7136.

### [Tensile elastic modulus and tensile elongation of film]

These were measured by pulling a film cut into a rectangle test piece having a width of 15 mm and length of 100 mm, with a universal tester manufactured by Instron Corp. at a tensile rate of 500 mm/min and a span of 50 mm under condition of a temperature of 23°C and a relative humidity of 55%.

### Example 1

Polycondensation and deglycolation reaction were performed at a mole ratio of ethylene glycol, succinic acid, and trimethylolpropane of 103, 100, and 0.2, and a polyethylene succinate-based polymer of a weight average molecular weight of 240000, and a MFR value of 4.7 (190°C, 2.16 kg), which had been chain-extended with hexamethylene diisocyanate was obtained. And the resulting polymer was used to perform film molding with an inflation molding machine for LDPE having a die lip diameter of 150 mm and a lip gap of 2 mm. A molding temperature was 150°C, a blow-up ratio was 1.9, a film winding rate was 21.4 m/min, and a film having a thickness of 25 µm was obtained (film A).

The resulting film A had high transparent feeling, and a haze value was 9.4, and whole light transmittance was 91.5%. This film A was easily heat-sealed with a simple heat sealer (Poly Sealer 301E type manufactured by Fuji Impulse Co., Ltd.). The film A had flexibility, and an elastic modulus was 51.6 kgf/mm² and 45.6 kgf/mm², respectively, in MD (machine direction: flow direction in film molding) and TD (traverse direction: direction vertical to flow direction in film molding), and a tensile elongation was 274% and 506%, respectively, in MD and TD.

### [Organoleptic test of smell]

Each 1 g of a lemon perfume, a curry powder, a ginger powder, a cinnamon powder, a tea, or a Japanese tea as a smell generating substance was placed into a 70 cc glass container having an opening part of a diameter of 3.4 cm, the opening part was sealed with the polyethylene succinate-based polymer film obtained in Example 1(film A), this was placed into an aluminum container, and the aluminum container was opened after 1 hour, 12 hours and 24 hours to perform an organoleptic test of a smell.

Evaluation was performed by 3 evaluators, no feeling of a smell was regarded as ○, slight feeling of a smell was regarded as Δ, and feeling of a smell was regarded as ×, and an answer indicated by a majority of evaluators was adopted as evaluation result. Results are shown in Table 1.

### Example 2

The polyethylene succinate-based polymer having a melt flow index value of 4.7 used in Example 1 and polybutylene adipate terephthalate (trade name: Ecoflex FBX7011 manufactured by BASF Ltd.) were blended at a ratio of 50 : 50 (mass ratio), and this was molded into a film with the same molding machine as that of Example 1. A film having a thickness of 24 µm (film D) was obtained at a molding temperature of 150°C, a blow-up ratio of 2.2, and a winding rate of 20.0 m/min.

A haze value of the resulting film D was 8.7, and whole light transmittance was 93%. A tensile elastic modulus of the film D was 30.2 kgf/mm² in MD and 20.5 kgf/mm² in TD, and a tensile elongation was 397% in MD and 443% in TD.

### Comparative Example 1

Using polybutylene succinate adipate (BIONOLE #3001 manufactured by Showa Highpolymer Co., Ltd.), film molding was performed with an inflation molding machine for LLDPE having a die lip diameter of 100 mm and a lip gap of 3 mm. A molding temperature was 150°C, a blow-up ratio was 2.2, a winding rate was 16.1 m/min, and a film having a thickness of 25 µm was obtained (film B).

The resulting film B was subjected to the same organoleptic test as that of Example 1. Results are shown in Table 1.

### Comparative Example 2

An LDPE film (film C) having a thickness of 35 µm was subjected to a smell organoleptic test as in Example 1. Results are shown in Table 1.

### Comparative Example 3

Using the polyethylene succinate-based polymer having a melt flow index value of 4.7 used in Example 1 and polybutylene adipate terephthalate (Ecoflex FBX7011 manufactured by BASF Ltd.) at a ratio of 20 : 80 (mass ratio), film molding was performed with the same molding machine as that of Example 1. A film having a thickness of 19 µm was obtained (film E) at a molding temperature of 150°C, a blow-up ratio of 2.2, and a winding rate of 20.5 m/min.

A haze value of the resulting film E was 8.9, and whole light transmittance was 93%. A tensile elastic modulus of the film E was 9.4 kgf/mm² in MD and 11.2 kgf/mm² in TD, and a tensile elongation was 391% in MD and 364% in TD. Using this film E, the aforementioned smell organoleptic test was performed, and results are shown in Table 1.

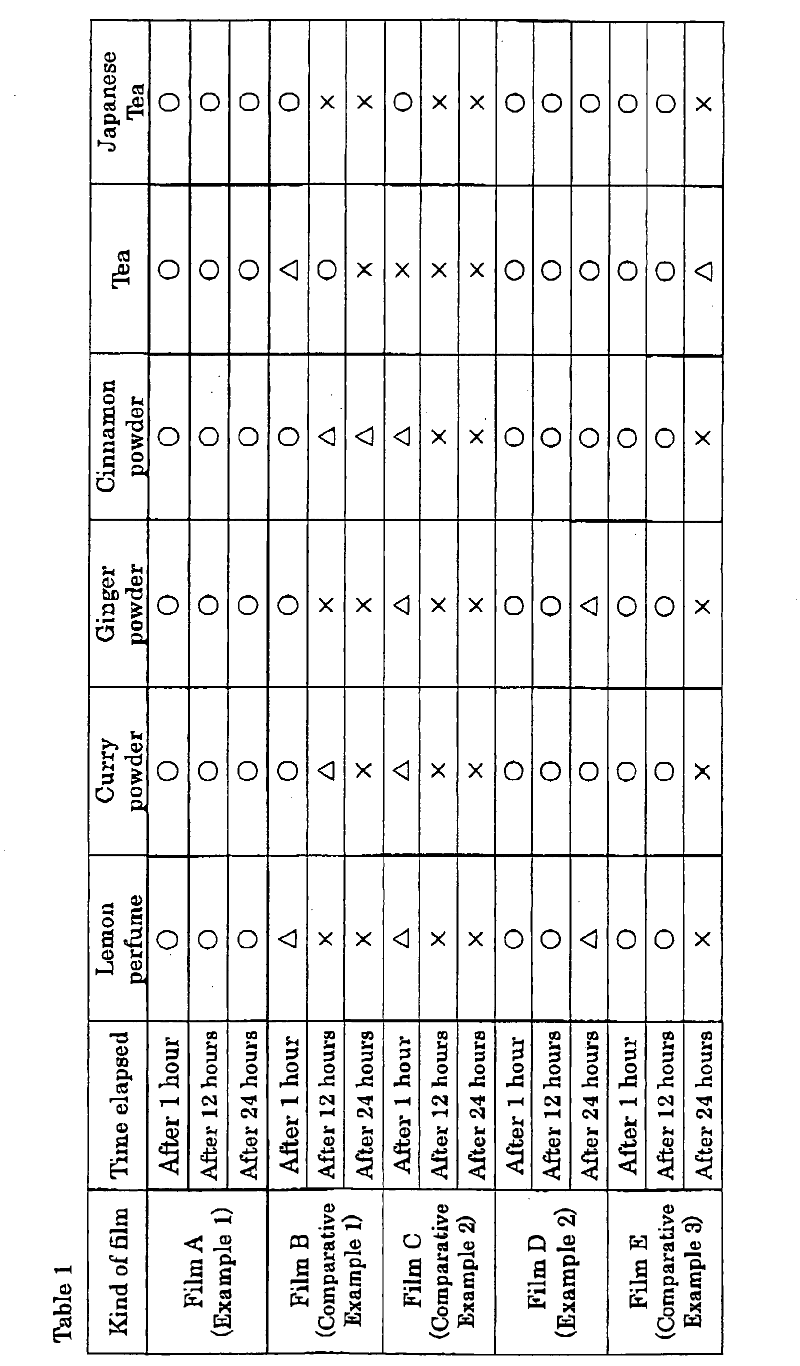

As is obvious from Table 1, the films A and D are excellent in suppressing diffusion of a volatile substance and/or a smell of a smell generating substance. And they are suitably used as a packaging material excellent in biodegradability.

A package of the present invention is effective in suppressing diffusion of a volatile substance and/or a smell, and is suitably utilized as a package for suppressing scattering of a volatile substance and/or a smell generating substance. Moreover, the packaging material is decompose and vanished under natural environment such as in soils after use, it is used as one solution for solving environmental pollution due to plastic waste.

This application is based on Japanese Patent application serial no.2004-37559 filed with Japan Patent Office on February 16, 2004, the contents of which are hereby incorporated by reference.

Although the present invention has been fully described by way of example, it is to be understood that various changes and modifications will be apparent to those skilled in the art, therefore, unless otherwise such changes and modifications depart from the scope of the present invention hereinafter defined, they should be construed as being included therein.

## Claims

1. A packaging material for packaging a volatile substance and/or a smell generating substance, the packaging material comprising a layer including a biodegradable resin material containing 30 to 100% by weight of a polyethylene succinate-based polymer.

2. A package for suppressing scattering of a volatile substance and/or a smell, the package comprising:
a packaging material which has a layer including a biodegradable resin material containing 30 to 100% by weight of a polyethylene succinate-based polymer; and
an article to be packaged which generates a volatile substance and/or a smell.

3. A method of using a packaging material, comprising: packaging an article to be packaged which generates a volatile substance and/or a smell with a packaging material which has a layer including a biodegradable resin material containing 30 to 100% by weight of a polyethylene succinate-based polymer.
